# EUROPEAN PATENT APPLICATION

(11) **EP 4 560 179 A1**
(43) Date of publication of application: **28.05.2025**
(21) Application number: 24214560.5
(22) Date of filing: 21.11.2024
(51) Int. Cl.: F16N 3/12, F16N 11/08, F16N 13/02

(54) **GREASE DISCHARGING APPARATUS**

(30) Priority: 23.11.2023 CN 202311576690; 23.11.2023 CN 202311578218; 23.11.2023 CN 202323169118 U; 23.11.2023 CN 202323180651 U
(71) Applicant: Greenworks (Jiangsu) Co., Ltd., Changzhou, Jiangsu 213023 (CN)
(72) Inventor: HU, Yongshen, Changzhou (CN); WANG, Guohui, Changzhou (CN); LIU, Haihong, Changzhou (CN)
(74) Representative: Bergenstråhle & Partners AB

(57) **Abstract**

A grease discharging apparatus includes a pump body (103), a grease storage tube (104), an eccentric reciprocating assembly (105) and a pressure regulating assembly (106). The grease storage tube (104) is connected to the pump body (103). The eccentric reciprocating assembly (105) is installed on a top end of the pump body (103). The eccentric reciprocating assembly (105) includes a plunger (3). The plunger (3) is configured to reciprocate within the pump body (103) to cause grease in the grease storage tube (104) to enter an external grease injection device through a grease discharge circuit. The grease discharge circuit includes a grease discharge chamber (1) and an overflow hole (2) communicating with each other. The overflow hole (2) communicates with the grease storage tube (104). The pressure regulating assembly (106) is installed in the grease discharge circuit.

## Description

### TECHNICAL FIELD

The present invention is related to a grease discharging apparatus, and more particularly related to a grease discharging apparatus with a flexible control.

### BACKGROUND

A grease gun is a widely used manual tool designed to inject lubricating grease into mechanical equipment. This process helps reduce friction between moving parts, ensuring that machines run smoothly and their components last longer. Grease guns are commonly found in industrial settings, automotive repair shops, and facilities that maintain heavy machinery, where regular lubrication is essential for the proper functioning of equipment.

The basic function of a grease gun involves a pump mechanism that pressurizes grease and pushes it through a nozzle into lubrication points on the machinery. This pressure-driven process is critical for delivering grease to hard-to-reach areas within mechanical systems. Proper lubrication reduces wear and tear on parts and helps prevent overheating due to excessive friction, which can lead to premature equipment failure.

One challenge commonly faced with grease guns is the rise in internal pressure that occurs as the gun approaches full grease injection. When the tool is nearing the end of the injection process but has not yet stopped operating, the pressure inside the pump body continues to increase. This rise in pressure can cause operational issues, making it difficult to regulate the amount of grease being dispensed. If not controlled properly, this can lead to either too much or too little grease being applied to the equipment, compromising its maintenance.

To mitigate the risks associated with fluctuating pressure levels, most modern grease guns incorporate a pressure regulation structure. This mechanism is designed to manage the pressure within the pump, ensuring it stays within a safe range. By controlling pressure output, the regulation structure ensures that the grease gun operates efficiently, delivering the correct amount of grease to the machinery without causing damage to the tool or the equipment being serviced.

Despite the inclusion of pressure regulation mechanisms, grease guns can still experience issues over time. Prolonged use may lead to wear and tear on the pressure regulation structure, causing it to lose accuracy. As a result, the tool may no longer maintain consistent pressure during operation. This can lead to either excessive or insufficient lubrication, affecting the performance of both the grease gun and the machinery it services.

In addition to performance concerns, deviations in pressure output can also pose safety risks. When the pressure inside the grease gun's pump exceeds recommended levels, there is a risk of tool malfunction or failure, which can result in injury to the user or damage to the equipment being maintained. Therefore, ensuring stable and reliable pressure control is essential for both the functionality of the tool and the safety of the operator.

Over time, the components of the pressure regulation system can degrade, especially when the grease gun is used frequently or in demanding environments. As parts within the regulation system wear down, they become less effective at maintaining consistent pressure. This degradation can lead to further performance issues, requiring frequent maintenance or repair to keep the tool functioning properly.

Given these limitations, it is evident that there is a need for improved durability and reliability in the pressure regulation systems of grease guns. Enhanced designs could help address the issue of pressure deviation, ensuring more stable operation over the tool's lifespan. By focusing on long-term performance, manufacturers can reduce the likelihood of tool failure and improve the overall reliability of grease guns in the field.

In addition to improving pressure regulation accuracy, advancements could also focus on the ease of maintenance. Regular upkeep is essential to keep grease guns functioning correctly, but current designs may not always make it easy for users to access and adjust the pressure regulation components. Simplifying the maintenance process could help users extend the life of their tools while ensuring consistent performance.

Ultimately, while grease guns are an essential tool for maintaining mechanical equipment, the issues associated with fluctuating pressure highlight the importance of further innovation. Addressing the challenges in pressure regulation can lead to tools that are safer, more efficient, and more durable, benefiting industries that rely on grease guns for regular equipment maintenance.

### SUMMARY

In some embodiments, a grease discharging apparatus includes a pump body, a grease storage tube, an eccentric reciprocating assembly and a pressure regulating assembly.

The grease storage tube is connected to the pump body. The eccentric reciprocating assembly is installed on a top end of the pump body. The eccentric reciprocating assembly includes a plunger.

The plunger is configured to reciprocate within the pump body to cause grease in the grease storage tube to enter an external grease injection device through an grease discharge circuit.

The grease discharge circuit includes a grease discharge chamber and an overflow hole communicating with each other. The overflow hole communicates with the grease storage tube. The pressure regulating assembly is installed in the grease discharge circuit.

In an initial state, the pressure regulating assembly blocks the grease discharge chamber and the overflow hole, causing grease in the grease discharge chamber to flow into the external grease injection device.

When a pressure in the grease discharge chamber is greaterthan a pressure output by the pressure regulating assembly, the pressure regulating assembly generates a displacement, causing the grease discharge chamberto communicate with the overflow hole, and grease in the grease discharge chamber flows back to the grease storage tube through the overflow hole.

In some embodiments, the pressure regulating assembly includes a first elastic element, a valve core located at one end of the first elastic element, and a third steel ball connected to the valve core.

The grease discharge chamber communicates with the overflow hole through a through-hole.

In the initial state, the third steel ball is in contact with the through-hole to block the grease discharge chamber and the overflow hole.

When the pressure in the grease discharge chamber is greater than the pressure output by the pressure regulating assembly, the third steel ball separates from the through-hole, causing the grease discharge chamber to communicate with the overflow hole.

In some embodiments, the pressure regulating assembly further includes an adjusting knob and an adjusting structure.

Rotation of the adjusting knob adjusts the pressure output by the pressure regulating assembly.

One end of the adjusting structure is threadedly connected to the pump body, and another end of the adjusting structure is connected to the adjusting knob and is capable of rotating with the adjusting knob to achieve axial movement within the pump body. The adjusting knob is engaged with the pump body.

In some embodiments, the adjusting knob has a first gear position, a second gear position, and a third gear position.

When the adjusting knob is rotated to the first gear position, the pressure regulating assembly outputs a first pressure.

When the adjusting knob is rotated to the second gear position, the pressure regulating assembly outputs a second pressure.

When the adjusting knob is rotated to the third gear position, the pressure regulating assembly outputs a third pressure.

The first pressure is greater than the second pressure, and the second pressure is greater than the third pressure.

In some embodiments, the pump body is provided with a first gear marking, a second gear marking, and a third gear marking.

The adjusting knob is provided with an indicator arrow.

When the adjusting knob is rotated to the first gear position, the indicator arrow points to the first gear marking, and the first pressure output by the pressure regulating assembly is at a maximum.

When the adjusting knob is rotated to the second gear position, the indicator arrow points to the second gear marking, and the second pressure output by the pressure regulating assembly is half of the first pressure.

When the adjusting knob is rotated to the third gear position, the indicator arrow points to the third gear marking, and the third pressure output by the pressure regulating assembly is zero, causing the grease discharge chamber to communicate with the overflow hole.

In some embodiments, the pressure regulating assembly further includes a second elastic element, and a second steel ball.

One end of the second elastic element abuts against the pump body, and another end of the second elastic element is in contact with the second steel ball.

The second steel ball abuts against the adjusting knob to achieve gear shifting of the adjusting knob.

In some embodiments, the grease discharging apparatus may also include a speed reduction assembly connected to the eccentric reciprocating assembly.

The speed reduction assembly provides power to the eccentric reciprocating assembly to drive the plunger to reciprocate.

In some embodiments, the grease discharging apparatus may also include a control assembly including a controller and a warning device.

The controller is configured to control the warning device to issue a reminder when the pressure in the grease discharge chamber reaches the pressure output by the pressure regulating assembly, causing the grease injection device to stop working, thereby achieving quantitative grease supply.

In some embodiments, the grease discharging apparatus may also include an grease discharge tube assembly connected to the pump body and communicating with the grease discharge chamber.

The grease discharge tube assembly allows gas in the grease storage tube to be discharged through the grease discharge tube assembly.

In some embodiments, the grease discharging apparatus may also include an adjusting knob, an adjusting column and an adjusting member.

The adjusting knob is connected to the pump body.

The adjusting column and the adjusting member are located within the pump body.

One end of the adjusting column is connected to the adjusting knob, and another end of the adjusting column is threadedly connected to the pump body.

The adjusting member is accommodated within the adjusting column and is threadedly connected to the adjusting column.

When the adjusting knob is rotated, the adjusting column and the adjusting member rotate as a whole with the adjusting knob and move axially within the pump body.

The adjusting member is further configured to rotate relative to the adjusting column and move axially within the adjusting column, thereby achieving fine pressure adjustment.

In some embodiments, the adjusting knob is connected to the pump body through a snap connection.

An outer side wall of the adjusting knob is provided with an outwardly protruding snap.

An inner circumferential wall of the pump body is provided with a groove matching with the snap.

The groove is arranged in a ring shape, allowing the adjusting knob to rotate relative to the pump body.

In some embodiments, the adjusting column is cylindrical.

An outer circumferential wall of the adjusting column is provided with an outwardly protruding positioning member.

The adjusting knob correspondingly is provided with a fixing groove.

The positioning member is accommodated in the fixing groove and is capable of axially moving relative to the fixing groove.

In some embodiments, the peripheral wall of the adjusting column at an end away from the positioning member is provided with a first threaded structure.

The adjusting column is connected to the pump body through the first threaded structure.

When the adjusting knob is rotated, the adjusting column is capable of axially moving within the pump body.

In some embodiments, the adjusting column is a hollow ring structure.

An inner circumferential wall of the adjusting column at an end close to the adjusting knob is provided with a second threaded structure.

An outer circumferential wall of the adjusting member correspondingly is provided with a third threaded structure mating with the second threaded structure.

The adjusting member is capable of axially moving within the adjusting column.

In some embodiments, the adjusting member is cylindrical.

An end of the adjusting member close to the adjusting knob is provided with a limiting groove.

The adjusting knob correspondingly is provided with an adjusting hole.

The limiting groove and the adjusting hole are aligned and exposed.

In some embodiments, the adjusting knob further includes a decorative cover for covering the adjusting hole.

The decorative cover is movably connected to the adjusting knob.

In some embodiments, the grease discharging apparatus may also include a first elastic element, a valve core and a first steel ball.

The first elastic element assembled within the pump body.

The valve core and a first steel ball are disposed at two ends of the first elastic element.

The first steel ball is located within the adjusting column and in contact with the adjusting member.

One end of the first elastic element is fitted over the valve core, and another end of the first elastic element is in contact with the first steel ball, and
When the adjusting column and the adjusting member move axially, the first elastic element is compressed.

In some embodiments, a second steel ball and a second elastic element are located within the pump body.

One end of the second elastic element abuts against the pump body, and another end of the second elastic element is in contact with a spherical surface of the second steel ball.

The second steel ball abuts against the adjusting knob.

In some embodiments, the grease discharging apparatus may also include a control assembly including a controller and a warning device.

The controller is configured to control the pressure to maintain stability for a first predetermined time after the pressure in the pump body reaches a preset pressure value, to control the pump body to continue operating for a second predetermined time after the first predetermined time, and then stop, and to control the warning device to issue a warning to indicate completion of grease injection.

In some embodiments, the grease discharging apparatus may also include a battery pack.

The controller assembly is further configured to control the battery pack to perform a self-check of its power level, and to control the warning device to issue a warning when the power level does not meet a preset value.

### BRIEF DESCRIPTION OF DRAWINGS

Fig. 1 illustrates is a perspective structural schematic diagram of the grease gun of this invention.
Fig. 2 illustrates is another perspective structural schematic diagram of the grease gun in 1.
Fig. 3 illustrates is an internal structure assembly diagram of the grease gun in 1.
Fig. 4 illustrates is a cross-sectional view of the grease gun in 1.
Fig. 5 illustrates is an enlarged view of the circled area A in 4.
Fig. 6 illustrates is an assembly diagram of the pressure regulating assembly in 3.
Fig. 7 illustrates is a perspective structural schematic diagram of the adjusting knob in 6.
Fig. 8 illustrates is a perspective structural schematic diagram of the adjusting column in 6.
Fig. 9 illustrates is a perspective structural schematic diagram of the adjusting member in 6.
Fig. 10 illustrates is an assembly diagram of the pump body, pressure regulating assembly, and motor in 3.
Fig. 11 illustrates is an enlarged view of the circled area B in 10.
Fig. 12 illustrates is a flow chart of the pressure-controlled grease supply method of this invention's grease gun.
Fig. 13 illustrates is a flow chart of an implementation example of the pressure-controlled grease supply method of this invention's grease gun.

### DETAILED DESCRIPTION

To clearly illustrate the purpose, technical solution, and advantages of this invention, the following detailed description refers to the accompanying drawings and specific embodiments.

The grease discharging apparatus described can be adapted for use in handling a wide variety of lubricants, including different types of grease. While the apparatus is designed to efficiently inject or discharge greases, its versatility extends to greases, which are semi-solid lubricants commonly used in machinery where liquid lubricants might not be effective. The apparatus can be utilized to deliver these greases to precise locations, ensuring optimal lubrication in high-friction areas of machinery or equipment.

Greases come in various formulations, each tailored for specific applications. For example, lithium grease is one of the most commonly used greases due to its water resistance, high temperature tolerance, and versatility, making it suitable for automotive and industrial applications. Calcium grease, on the other hand, is often used in marine environments as it provides excellent water resistance and rust prevention. Another type, aluminum complex grease, is favored for high-temperature applications and is frequently used in heavy machinery such as in mining and construction industries.

Beyond these, specialized greases such as silicone grease, which offers exceptional resistance to extreme temperatures, and molybdenum disulfide grease, known for its ability to withstand high pressure and reduce friction in heavily loaded parts, are also used in specific applications. The grease discharging apparatus can be calibrated and adjusted to handle these various types of greases, ensuring the right amount is dispensed based on the needs of the machinery, regardless of the grease's consistency or specific formulation.

The grease discharging apparatus proves especially useful when applied to the maintenance of gardening tools, where proper lubrication is essential for ensuring smooth operation and longevity. Gardening equipment, such as lawn mowers, hedge trimmers, and chainsaws, often consist of multiple moving parts that are subjected to high friction and wear during use. These tools require regular lubrication to reduce friction between blades, gears, and other mechanical components. By utilizing the grease discharging apparatus to apply grease to these critical points, gardeners can ensure their tools remain in optimal working condition.

For example, lawn mowers have bearings, wheels, and cutting blades that must be greased to prevent rust and ensure smooth movement. Hedge trimmers require lubrication on the blade joints to reduce wear caused by constant cutting motion. Similarly, chainsaws benefit from regular greasing of the chain and bar to prevent overheating and wear during operation. The grease discharging apparatus can be used to apply the appropriate type of grease to these parts, whether it's lithium grease for its water resistance or another specialized grease designed for high-temperature or heavy-load applications. This targeted maintenance helps prolong the lifespan of gardening tools, reduces the frequency of breakdowns, and ensures smooth, efficient performance during regular use.

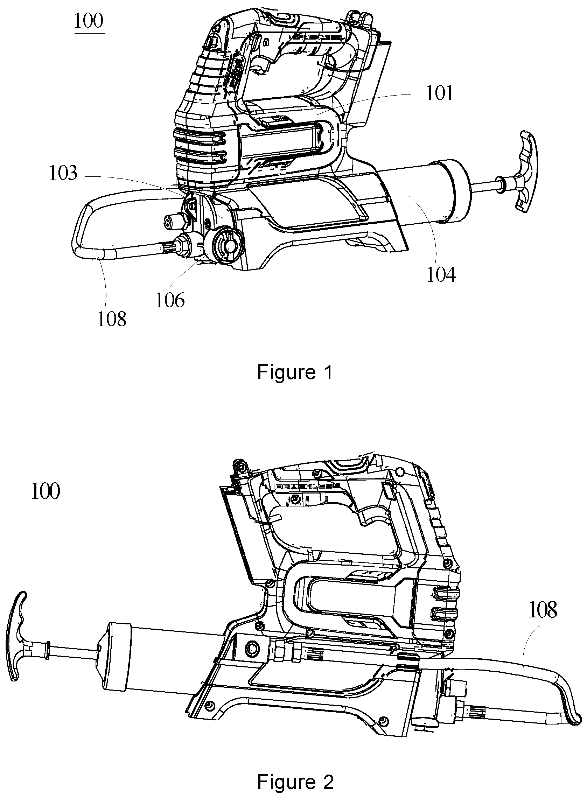

Please referto Fig. 1-3, which show a grease gun 100 disclosed in this invention. It includes a housing 101, an electric motor 102 installed inside the housing 101, and a pump body 103, grease storage tube 104, eccentric reciprocating assembly 105, pressure regulating assembly 106, speed reduction assembly (not shown), grease discharge tube assembly 108, control assembly 109, and battery pack (not shown) connected to the housing 101.

The pump body 103 is connected to the grease storage tube 104 to pump grease from the grease storage tube 104. The pump body 103 contains an grease discharge circuit, which includes an interconnected grease discharge chamber 1 and overflow hole 2. The overflow hole 2 is connected to the grease storage tube 104. The eccentric reciprocating assembly 105 is installed at the top of the pump body 103 and includes a plunger 3. The plunger 3 can reciprocate within the pump body 103, causing grease from the grease storage tube 104 to enter the grease discharge chamber 1 and then be discharged through the grease discharge tube assembly 108 into an external lubrication device (not shown). When the grease gun 100 is about to be fully filled with grease and the reciprocating motion hasn't stopped, the pressure in the grease discharge chamber 1 will rise. The pressure regulating assembly 106 is installed in the grease discharge circuit to regulate the pressure in the pump body 103, controlling the grease output of the grease gun 100. Initially, the pressure regulating assembly 106 blocks the grease discharge chamber 1 and the overflow hole 2, allowing grease in the grease discharge chamber 1 to flow into the external lubrication device. When the pressure in the grease discharge chamber 1 exceeds the pressure output by the pressure regulating assembly 106, the pressure regulating assembly 106 displaces, connecting the grease discharge chamber 1 and the overflow hole 2, causing grease in the grease discharge chamber 1 to flow back into the grease storage tube 104 through the overflow hole 2.

The control assembly 109 is installed inside the housing 101 and includes a controller 4 and a warning device 5. The controller 4 is designed to maintain stable pressure for a first set time when the pressure in the pump body 103 reaches a preset value, i.e., when the pressure in the grease discharge chamber 1 reaches the pressure output by the pressure regulating assembly 106. It then controls the pump body 103 to continue running for a second set time before stopping. The controller 4 also controls the warning device 5 to issue a warning indicating the completion of lubrication. The warning device 5 includes a light and a buzzer. The light emits flashing light, and the buzzer emits an alarm sound. The grease gun 100 also includes a battery pack that powers the electric motor 102, controller 4, and warning device 5. The controller 4 is also designed to control the battery pack to perform a self-check of its power level and control the warning device 5 to issue a warning when the power level doesn't meet the preset value. The speed reduction assembly is connected to the electric motor 102 and the eccentric reciprocating assembly 105, providing power to the eccentric reciprocating assembly 105 to drive the plunger 3 in reciprocating motion.

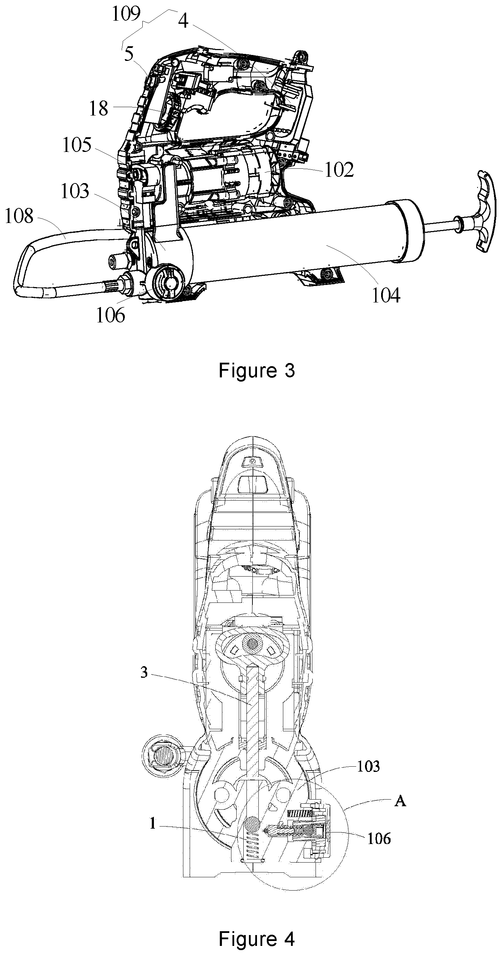

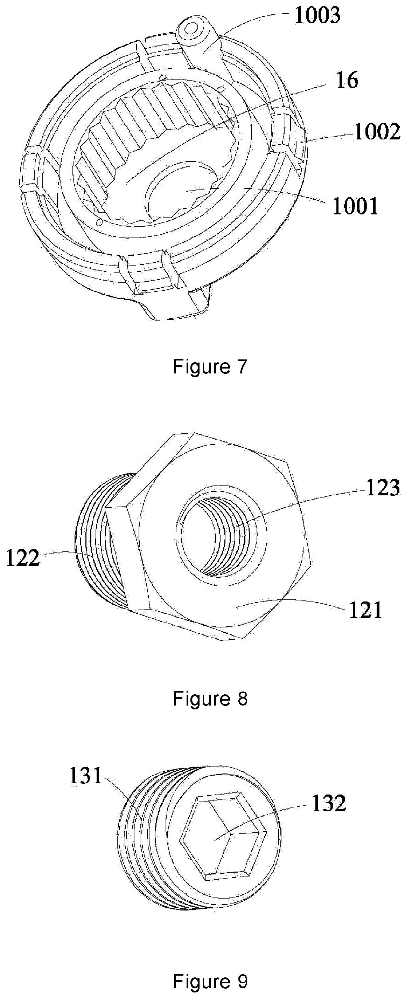

As shown in Fig. 4-9, the pressure regulating assembly 106 includes a first elastic element 6, a valve core 7 at one end of the first elastic element 6, and a third steel ball 8 connected to the valve core 7. The first elastic element 6 can be a spring. The grease discharge chamber 1 and the overflow hole 2 are connected through a through-hole 9. Initially, the third steel ball 8 is in contact with the through-hole 9, blocking the grease discharge chamber 1 and the overflow hole 2. When the pressure in the grease discharge chamber 1 exceeds the pressure output by the pressure regulating assembly 106, the third steel ball 8 separates from the through-hole 9, connecting the grease discharge chamber 1 and the overflow hole 2. It's understandable that the end of the valve core 7 near the third steel ball 8 is surrounded by a flow guide groove (not labeled). After the third steel ball 8 separates from the through-hole 9, the grease in the grease discharge chamber 1 flows through the flow guide groove into the overflow hole 2, eventually flowing back into the grease storage tube 104.

The pressure regulating assembly 106 also includes an adjusting knob 10 and an adjusting structure 11. Rotating the adjusting knob 10 adjusts the pressure output by the pressure regulating assembly 106. One end of the adjusting structure 11 is threaded to the pump body 103, while the other end is connected to the adjusting knob 10 and can rotate with it, achieving axial movement within the pump body 103.

Specifically, the adjusting structure 11 includes an adjusting column 12 and an adjusting member 13. One end of the adjusting column 12 is connected to the adjusting knob 10, while the other end is threaded to the pump body 103. The adjusting member 13 is housed within the adjusting column 12 and is threaded to it. When the adjusting knob 10 is rotated, the adjusting column 12 and adjusting member 13 rotate as a whole with the adjusting knob 10 and move axially within the pump body 103. The adjusting member 13 is also configured to rotate relative to the adjusting column 12 and move axially within it, achieving fine pressure adjustment.

The pressure regulating assembly 106 also includes a first steel ball 14. The first steel ball 14 is located at the end of the first elastic element 6 away from the valve core 7. The first steel ball 14 is inside the adjusting column 12 and in contact with the adjusting member 13. One end of the first elastic element 6 is fitted over the valve core 7, while the other end is in contact with the first steel ball 14. When the adjusting column 12 and adjusting member 13 move axially, the first elastic element 6 is compressed.

The adjusting column 12 is cylindrical. The outer wall of the adjusting column 12 has an outwardly protruding positioning member 121. The adjusting knob 10 has a corresponding fixing groove 16. The positioning member 121 is housed in the fixing groove 16 and can move axially relative to it. The outer wall of the end of the adjusting column 12 away from the positioning member 121 has a first threaded structure 122. The adjusting column 12 is connected to the pump body 103 through the first threaded structure 122, allowing the adjusting column 12 to move axially within the pump body 103 when the adjusting knob 10 is rotated.

The adjusting column 12 is a hollow ring structure. The inner wall of the end of the adjusting column 12 near the adjusting knob 10 has a second threaded structure 123. The outer wall of the adjusting member 13 has a corresponding third threaded structure 131 that matches the second threaded structure 123, allowing the adjusting member 13 to move axially within the adjusting column 12. The adjusting member 13 is cylindrical. The end of the adjusting member 13 near the adjusting knob 10 has a limiting groove 132. The adjusting knob 10 has a corresponding adjusting hole 1001. The limiting groove 132 and the adjusting hole 1001 are aligned and exposed.

Preferably, the adjusting knob 10 is connected to the pump body 103 by a snap. The outer wall of the adjusting knob 10 has an outwardly extending snap 1002. The inner wall of the pump body 103 has a corresponding groove (not labeled) for the snap 1002. The groove is ring-shaped, allowing the adjusting knob 10 to rotate relative to the pump body 103. The adjusting knob 10 also includes a decorative cover 17 to cover the adjusting hole 1001. The decorative cover 17 is movably connected to the adjusting knob 10.

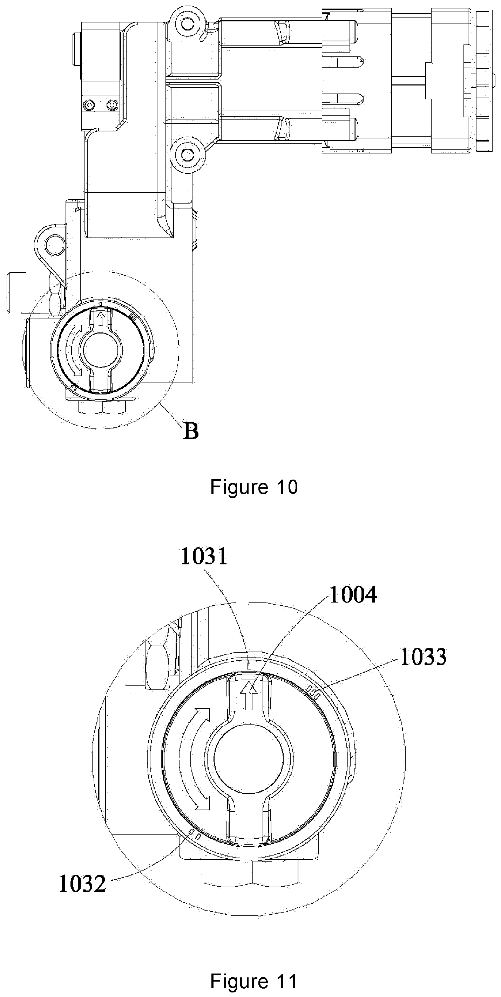

As shown in Fig. 10-11, the adjusting knob 10 has a first position, a second position, and a third position. When the adjusting knob 10 is rotated to the first position, the pressure regulating assembly 106 outputs a first pressure. When rotated to the second position, it outputs a second pressure. When rotated to the third position, it outputs a third pressure. The first pressure is greater than the second pressure, which is greater than the third pressure. The first pressure is high pressure, and the second pressure is low pressure. Preferably, the adjusting knob 10 has a stop pin 1003, ensuring that the adjusting knob 10 rotates from the first position to the second position to the third position, or from the third position to the second position to the first position.

The pump body 103 has a first gear indicator 1031, a second gear indicator 1032, and a third gear indicator 1033. The adjusting knob 10 has an indicator arrow 1004. When the adjusting knob 10 is rotated to the first position, the indicator arrow 1004 points to the first gear indicator 1031, and the pressure regulating assembly 106 outputs the highest first pressure. When rotated to the second position, the indicator arrow 1004 points to the second gear indicator 1032, and the output second pressure is half of the first pressure. When rotated to the third position, the indicator arrow 1004 points to the third gear indicator 1033, and the output third pressure is zero, connecting the grease discharge chamber 1 and the overflow hole 2. Furthermore, when the grease discharge chamber 1 is in a high-pressure state, rotating the adjusting knob 10 to the third position can release the pressure, making it easier to remove the grease discharge tube assembly 108. The grease discharge tube assembly 108 is connected to the grease discharge chamber 1, allowing air introduced during grease storage in the grease storage tube 104 to be discharged through the grease discharge tube assembly 108.

As shown in Fig. 3, the pressure regulating assembly 106 also includes a flow adjustment knob 18. The flow adjustment knob 18 can be rotated to switch between non-quantitative and quantitative gear positions. In this embodiment, the non-quantitative gear position is displayed as NO, and the quantitative gear positions include 1, 2, 3, 4, 5, 6, 7, 8, 9, 10, 15, 20, 25, 50 adjustment positions, which are not limited to these. When the flow adjustment knob 18 is in the non-quantitative gear position, after the pressure in the pump body 103 reaches the pressure set value, it maintains stable pressure for the first set time, then controls the pump body 103 to continue running for the second set time before stopping. The grease gun 100 issues a warning indicating the completion of lubrication.

When the flow adjustment knob 18 is in a quantitative gear position, it determines whether the pressure in the pump body 103 has reached the preset pressure value during operation. If yes, it maintains stable pressure for the first set time, then controls the pump body 103 to continue running for the second set time before stopping. The grease gun 100 issues a warning indicating the completion of lubrication. If no, it waits until the grease output reaches the set amount, then controls the pump body 103 to stop. The grease gun 100 issues a warning indicating the completion of lubrication.

As shown in Fig. 4, the pressure regulating assembly 106 also includes a second elastic element 19 and a second steel ball 20. The second elastic element 19 can be a spring. One end of the second elastic element 19 abuts against the pump body 103, while the other end adheres to the second steel ball 20. The second steel ball 20 abuts against the adjusting knob 10. The adjusting knob 10 has a corresponding rotation path for the second steel ball 20 (not labeled). The rotation path has grooves (not labeled) to provide a sense of position when shifting gears. During the rotation of the adjusting knob 10, the second steel ball 20 remains in contact with it.

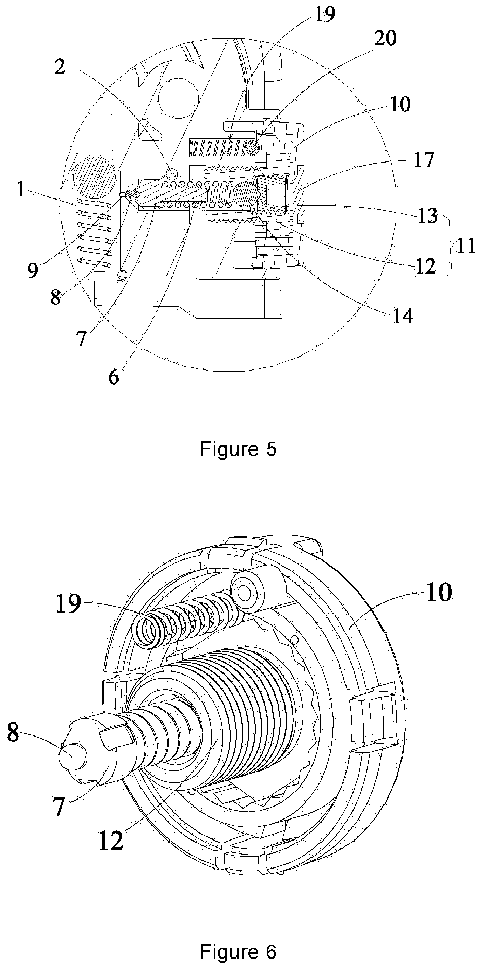

As shown in Fig. 5, the pressure regulating assembly 106 also includes a second elastic element 19 and a second steel ball 20. One end of the second elastic element 19 abuts against the pump body 103, while the other end adheres to the second steel ball 20. The second steel ball 20 abuts against the adjusting knob 10. The adjusting knob 10 has a corresponding rotation path for the second steel ball 20 (not labeled). The rotation path has grooves (not labeled) to provide a sense of position when shifting gears. During the rotation of the adjusting knob 10, the second steel ball 20 remains in contact with it.

In summary, the pressure fine-tuning structure of this utility model sets an adjusting member 13 within the adjusting column 12. When the adjusting knob 10 is rotated, the adjusting column 12 and adjusting member 13 rotate as a whole with the adjusting knob 10 and move axially within the pump body 103. Simultaneously, the adjusting member 13 can rotate relative to the adjusting column 12 and move axially within it, achieving pressure fine-tuning. Compared to existing technology, this utility model's pressure fine-tuning structure can achieve accurate and reliable pressure within the pump body 103. It allows for pressure calibration after long-term use of the grease gun 100, with a simple structure and convenient operation.

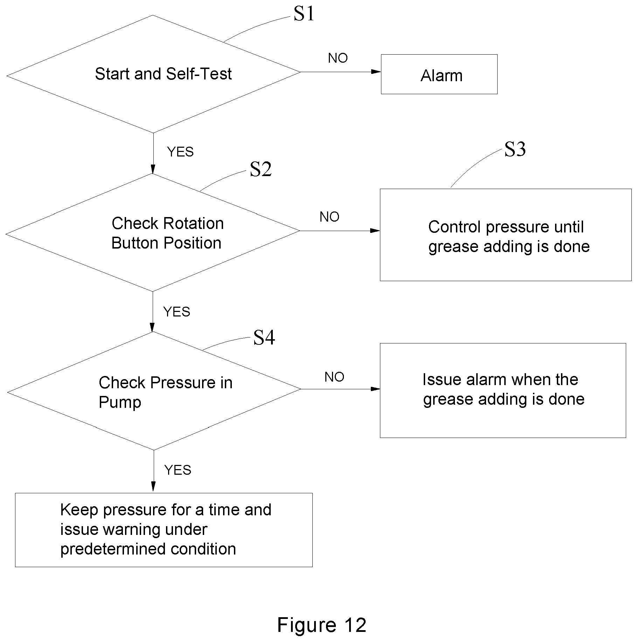

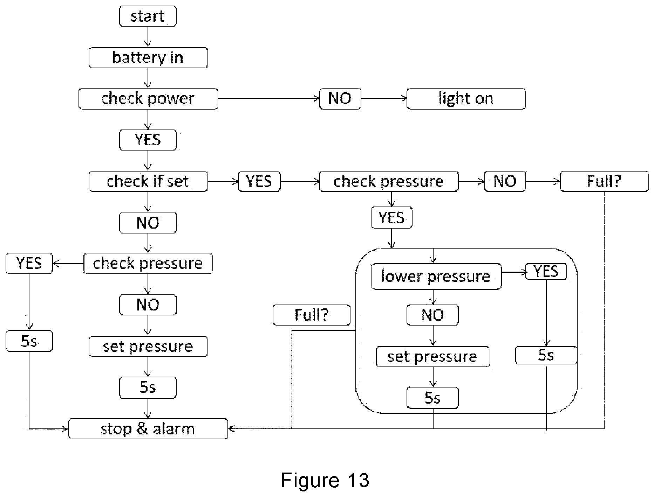

Please refer to Fig. 12-13. This invention also proposes a grease gun pressure supply control method, mainly including the following steps:
Step S1: Insert the battery pack (not shown) into the grease gun 100 to trigger the trigger (not shown). The grease gun 100 starts and performs a self-check of the battery level. If the battery level meets the preset value, proceed to step S2. If not, a warning is issued, i.e., the indicator light flashes as a reminder.
Step S2: Detect the current position of the volume adjustment knob 18. If it's in the variable volume position, proceed to step S3. If it's in the fixed volume position, proceed to step S4.
Step S3: When the pressure in the pump body 103 reaches the pressure set value, maintain stable pressure for the first set time. At this point, the controller 4 detects that the current required by the motor 102 is stable for the first set time. Then, control the pump body 103 to continue running for a second set time before stopping. The grease gun 100 issues a warning to indicate that lubrication is complete.

The pressure set value includes a low pressure set value and a high pressure set value. Step S3 specifically includes:
Step S31: When the pressure in the pump body 103 reaches the low pressure set value, determine if this pressure remains stable at the low pressure set value for the first set time. This means the controller 4 detects that the current required by the motor 102 is stable for the first set time. If so, control the pump body 103 to continue running for the second set time before stopping. The grease gun 100 issues a warning to indicate that lubrication is complete. If not, control the pump body 103 to increase pressure and proceed to step S32.
Step S32: When the pressure in the pump body 103 reaches the high pressure set value, control this pressure to remain stable at the high pressure set value for the first set time. At this point, the current required by the motor 102 is stable for the first set time. Then, control the pump body 103 to continue running for the second set time before stopping. The grease gun 100 issues a warning to indicate that lubrication is complete.
Step S4: Determine if the pressure in the pump body 103 reaches the pressure preset value during operation. If so, maintain stable pressure for the first set time. At this point, the current required by the motor 102 is stable for the first set time. Then, control the pump body 103 to continue running for the second set time before stopping. The grease gun 100 issues a warning to indicate that lubrication is complete. If not, wait until the grease discharge volume reaches the set value, then control the pump body 103 to stop. The grease gun 100 issues a warning to indicate that lubrication is complete.

In this embodiment, the first set time is 2-10 seconds, preferably 5 seconds. The second set time is also 2-10 seconds, preferably 5 seconds. However, this invention does not limit the specific values of the first and second set times, as long as their sum does not exceed 15 seconds.

It should be noted that in steps S3 and S4, regardless of whether the pressure in the pump body 103 reaches the pressure set value, as long as the grease discharge volume reaches the set value, the pump body 103 is immediately controlled to stop. The grease gun 100 issues a warning to indicate that lubrication is complete.

In summary, the control method of this invention switches between variable and fixed volume positions through the volume adjustment knob 18. It controls the grease gun 100 to stop working by determining whether the pressure in the pump body 103 reaches the pressure set value during operation, and issues a warning to remind the operator that lubrication is complete. Compared to existing technology, this invention's grease gun 100 can avoid grease waste while serving as a reminder.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings.

The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art. Such changes and modifications are to be understood as being included within the scope of the disclosure and examples as defined by the claims.

## Claims

1. A grease discharge apparatus, comprising:
a pump body (103);
a grease storage tube (104) connected to the pump body (103);
an eccentric reciprocating assembly (105) installed on a top end of the pump body (103), wherein the eccentric reciprocating assembly (105) comprises a plunger (3), wherein the plunger (3) is configured to reciprocate within the pump body (103) to cause grease in the grease storage tube (104) to enter an external grease injection device through a grease discharge circuit, wherein the grease discharge circuit comprises a grease discharge chamber (1) and an overflow hole (2) communicating with each other, wherein the overflow hole (2) is in communication with the grease storage tube (104); and
a pressure regulating assembly (106) installed in the grease discharge circuit, wherein in an initial state, the pressure regulating assembly (106) is configured to block the grease discharge chamber (1) and the overflow hole (2), causing grease in the grease discharge chamber (1) to flow into the external grease injection device, wherein when a pressure in the grease discharge chamber (1) is greater than a pressure output by the pressure regulating assembly (106), the pressure regulating assembly (106) is configured to generate a displacement, causing the grease discharge chamber (1) to communicate with the overflow hole (2), and grease in the grease discharge chamber (1) to flow back to the grease storage tube (104) through the overflow hole (2).

2. The grease discharging apparatus of claim 1, wherein the pressure regulating assembly (106) comprises: a first elastic element (6), a valve core (7) located at one end of the first elastic element (6), and a third steel ball (8) connected to the valve core (7), wherein the grease discharge chamber (1) is in communication with the overflow hole (2) through a through-hole (9), wherein in the initial state, the third steel ball (8) is in contact with the through-hole (9) to block the grease discharge chamber (1) and the overflow hole (2), wherein when the pressure in the grease discharge chamber (1) is greater than the pressure output by the pressure regulating assembly (106), the third steel ball (8) is arranged to be separated from the through-hole (9), causing the grease discharge chamber (1) to communicate with the overflow hole (2).

3. The grease discharging apparatus of claim 1, wherein the pressure regulating assembly (106) further comprises an adjusting knob (10) and an adjusting structure (11), wherein the adjusting knob (10) is arranged to adjust the pressure output by the pressure regulating assembly (106) when rotated, wherein one end of the adjusting structure (11) is threadedly connected to the pump body (103), and another end of the adjusting structure (11) is connected to the adjusting knob (10) and is capable of rotating with the adjusting knob (10) to achieve axial movement within the pump body (103).

4. The grease discharging apparatus of claim 3, wherein the adjusting knob (10) has a first gear position, a second gear position, and a third gear position, wherein when the adjusting knob (10) is rotated to the first gear position, the pressure regulating assembly (106) is configured to output a first pressure, wherein when the adjusting knob (10) is rotated to the second gear position, the pressure regulating assembly (106) is configured to output a second pressure, wherein when the adjusting knob (10) is rotated to the third gear position, the pressure regulating assembly (106) is configured to output a third pressure, wherein the first pressure is greater than the second pressure, and the second pressure is greater than the third pressure.

5. The grease discharging apparatus of claim 3, wherein the pressure regulating assembly (106) further comprises a second elastic element (19), and a second steel ball (20), wherein one end of the second elastic element (19) abuts against the pump body (103), and another end of the second elastic element (19) is in contact with the second steel ball (20), wherein the second steel ball (20) abuts against the adjusting knob (10) to achieve gear shifting of the adjusting knob (10).

6. The grease discharging apparatus of claim 1, further comprising a speed reduction assembly connected to the eccentric reciprocating assembly (105), wherein the speed reduction assembly is arranged to provide power to the eccentric reciprocating assembly (105) to drive the plunger (3) to reciprocate.

7. The grease discharging apparatus of claim 1, further comprising a control assembly (109) comprising a controller (4) and a warning device (5), wherein the controller (4) is configured to control the warning device (5) to issue a reminder when the pressure in the grease discharge chamber (1) reaches the pressure output by the pressure regulating assembly (106), causing the grease injection device to stop working, thereby achieving quantitative grease supply.

8. The grease discharging apparatus of claim 1, further comprising an adjusting knob (10), an adjusting column (12) and an adjusting member (13), wherein the adjusting knob (10) is connected to the pump body (103), wherein the adjusting column (12) and the adjusting member (13) are located within the pump body (103), wherein one end of the adjusting column (12) is connected to the adjusting knob (10), and another end of the adjusting column (12) is threadedly connected to the pump body (103), wherein the adjusting member (13) is accommodated within the adjusting column (12) and is threadedly connected to the adjusting column (12), wherein when the adjusting knob (10) is rotated, the adjusting column (12) and the adjusting member (13) are arranged to rotate as a whole with the adjusting knob (10) and move axially within the pump body (103), wherein the adjusting member (13) is further configured to rotate relative to the adjusting column (12) and move axially within the adjusting column (12), thereby achieving fine pressure adjustment.

9. The grease discharging apparatus of claim 8, wherein the adjusting knob (10) is connected to the pump body (103) through a snap connection, wherein an outer side wall of the adjusting knob (10) is provided with an outwardly protruding snap, wherein an inner circumferential wall of the pump body (103) is provided with a groove matching with the snap, wherein the groove is arranged in a ring shape, allowing the adjusting knob (10) to rotate relative to the pump body (103).

10. The grease discharging apparatus of claim 8, wherein the adjusting column (12) is cylindrical, wherein an outer circumferential wall of the adjusting column (12) is provided with an outwardly protruding positioning member (121), wherein the adjusting knob (10) is provided with a fixing groove (16), wherein the positioning member (121) is accommodated in the fixing groove (16) and is capable of axially moving relative to the fixing groove (16).

11. The grease discharging apparatus of claim 8, wherein the adjusting column (12) is a hollow ring structure, wherein an inner circumferential wall of the adjusting column (12) at an end close to the adjusting knob (10) is provided with a second threaded structure (123), wherein a peripheral wall of the adjusting member (13) is provided with a third threaded structure (131) matching with the second threaded structure (123), wherein the adjusting member (13) is capable of axially moving within the adjusting column (12).

12. The grease discharging apparatus of claim 8, wherein the adjusting member (13) is cylindrical, wherein an end of the adjusting member (13) close to the adjusting knob (10) is provided with a limiting groove (132), wherein the adjusting knob (10) is provided with an adjusting hole (1001), wherein the limiting groove (132) and the adjusting hole (1001) are aligned and exposed.

13. The grease discharging apparatus of claim 8, further comprising a first elastic element (6), a valve core (7) and a first steel ball (14), wherein the first elastic element (6) assembled within the pump body (103), wherein the valve core (7) and a first steel ball (14) are disposed at two ends of the first elastic element (6), wherein the first steel ball (14) is located within the adjusting column (12) and in contact with the adjusting member (13), wherein one end of the first elastic element (6) is sleeved on the valve core (7), and another end of the first elastic element (6) is in contact with the first steel ball (14), and wherein when the adjusting column (12) and the adjusting member (13) move axially, the first elastic element (6) is compressed.

14. The grease discharging apparatus of claim 8, wherein a second steel ball (20) and a second elastic element (19) are located within the pump body (103), wherein one end of the second elastic element (19) abuts against the pump body (103), and another end of the second elastic element (19) is in contact with a spherical surface of the second steel ball (20), wherein the second steel ball (20) abuts against the adjusting knob (10).

15. The grease discharging apparatus of claim 8, further comprising a control assembly (109) comprising a controller (4) and a warning device (5), wherein the controller (4) is configured to control the pressure to maintain stability for a first predetermined time after the pressure in the pump body (103) reaches a preset pressure value, to control the pump body (103) to continue operating for a second predetermined time after the first predetermined time, and then stop, and to control the warning device (5) to issue a warning to indicate completion of grease injection.

16. The grease discharging apparatus of claim 8, further comprising a battery pack, wherein the controller (4) assembly is further configured to control the battery pack to perform a self-check of its power level, and to control the warning device (5) to issue a warning when the power level does not meet a preset value.
